# EUROPEAN PATENT APPLICATION

(11) **EP 3 706 304 A1**
(43) Date of publication of application: **09.09.2020**
(21) Application number: 20158695.5
(22) Date of filing: 21.02.2020
(51) Int. Cl.: H02M 7/5387

(54) **CURRENT TYPE INVERTER**

(30) Priority: 06.03.2019 FI 20195164
(71) Applicant: Ricotec Oy, 01820 Klaukkala (FI)
(72) Inventor: KOMULAINEN, Risto, 01820 KLAUKKALA (FI)
(74) Representative: Finnpatent Oy

(57) **Abstract**

An inverter (20, 30) comprises an inductive circuit (L₂₁, L₃₀) at its DC-side, a multiphase inverter bridge (B₂₀), and a capacitive filter circuit (C₂₁-C₂₃, C₃₁-C₃₃) at its AC-side. The inverter bridge comprises phase switches (Pu, Pv, Pw) between its positive and negative terminals (B+, B-) and output AC terminals (U, V, W) of the inverter. The phase switches of the inverter bridge are capable to conduct current in one direction only, to the direction of the negative terminal. The inverter bridge routes DC input current (i_{D}) to the capacitive filter circuit such that output AC voltages (Uuact, Uvact, Uwact) remain within predefined permissible limit range (Δu) around sinusoidal reference values (Uuref, Uvref, u_{Wref}). One phase switch or a by-pass switch (V₃₁) is short-circuited in order to keep the DC input current within predefined permissible limit range (Δi) around a reference value.

## Description

### Technical field

The present invention relates to an inverter and a method for controlling an inverter, which is capable to transfer electric power from a direct current "DC" voltage supply to a multiphase alternating current "AC" voltage network. Furthermore, the invention relates to a computer program for controlling an inverter.

### Background of the invention

Inverters are widely used in power electronics applications in conversion between DC power and AC power. The most common inverter type, PWM-inverter, converts a supplying DC voltage into an AC output voltage consisting of pulses with varying widths. The output voltage is here formed by a so-called pulse width modulation "PWM" method, with an objective to form the output voltage pulse pattern with a desired fundamental component and minimum content of disadvantageous harmonics.

In some applications pulse-shape voltage is not acceptable, but the output voltage needs to be filtered closer to sinusoidal waveform. This is the case e.g. in many renewable energy applications, wherein the generated electric power is fed to an energy distribution grid.

Commonly used filter solution in PWM applications is the so-called LCL filter, coupled between the inverter output terminals and the electric power distribution network. LCL filter normally comprises a capacitive filter, coupled between a first and a second inductive filter.

Especially the inductive components of a LCL filter are typically large in size and heavy, producing considerably loss of power. Thus the filter requires proper enclosure and an efficient cooling arrangement. On the whole, the LCL filter increases the size and cost of the installation remarkably.

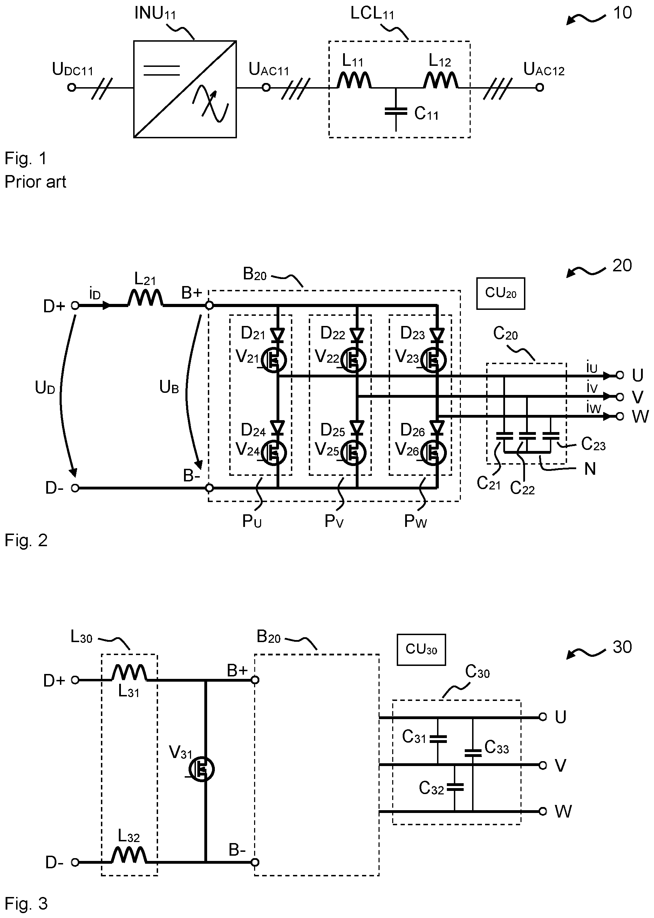

Fig.1 presents a simplified main circuit diagram of a prior art inverter 10, shown as a single line drawing. In the inverter, the supplying DC voltage U_{DC11} is inverted into a three phase AC voltage U_{AC11} by an inverter unit INU₁₁. The output voltage U_{AC11} consists of pulses whose height is the DC voltage of the intermediate circuit of the inverter unit INU₁₁. This voltage can normally not be connected to a public power distribution grid, due to the high content of the harmful harmonics of its pulse-like voltage shape. Therefore, this connection must be made through a heavy filter that removes most of the harmful harmonics. Normally the filter, such as LCL₁₁ in Fig.1, consists of a first inductance L₁₁, a second inductance L₁₂ and a capacitance C₁₁ between the inductances. With filter the output voltage U_{AC12} is essentially sinusoidal.

### Summary of the invention

The objective of the present invention is to provide a novel inverter, which is capable to generate from a supplying DC voltage input a multiphase AC voltage output with essentially sinusoidal waveform. Thus the disadvantage of the prior art, a heavy LCL filter circuit between the inverter and the electric power distribution network, can be avoided. The objective of the invention is achieved by what is stated in the independent claims, other preferred embodiments are disclosed in the dependent claims.

According to the present invention, the inverter comprises a multiphase inverter bridge, an inductive power circuit coupled between the supplying DC circuit and the inverter bridge, a capacitive filter circuit coupled between the inverter bridge and the external AC network and a control unit, i.e. a control processing system.

According to the present invention, the inverter bridge comprises a number of phase switches between its positive and negative terminal, each phase switch comprising a serial coupling of an upper leg power switch and a lower leg power switch. The power switches are capable to conduct current in one direction only, to the direction of the negative terminal. The common point of the power switches is coupled to an output AC terminal of the inverter, thus the number of the phase switches is equal to the number of the inverter output AC voltage phases.

According to an embodiment of the invention, a power switch of a phase switch comprises a serial connection of a diode and a controllable power semiconductor switch, e.g. an insulated gate bipolar transistor "IGBT".

According to an embodiment of the invention, a power switch of a phase switch is a controllable power semiconductor switch with internal one-direction current conducting capability and reverse voltage blocking capability, e.g. a so-called reverse-blocking IGBT or a GTO thyristor.

According to an embodiment of the invention, an extra controllable power semiconductor switch, called a by-pass switch in this context, is coupled directly between the positive and negative terminal of the inverter bridge.

According to the present invention, the inductive power circuit comprises an inductor at both connections or only one inductor at one of the two connections between the supplying DC circuit and the inverter bridge.

According to the present invention, the capacitive filter circuit comprises a capacitor between each AC terminal of the inverter and a common star point, i.e. a star-coupled filter.

According to an embodiment of the invention, applicable in an inverter with three phase switches, the capacitive filter circuit comprises a capacitor between each AC terminal of the inverter, i.e. a delta-coupled filter.

According to the present invention the inverter comprises means for measuring the input DC current and the output AC voltages of the inverter. However, since such measuring arrangements belong to a normal knowledge of a person skilled in the art, they are not discussed in more detail in this context. The control unit of the inverter uses this data to implement the method explained below.

According to the present invention, the main operation principle of the inverter is to route the input DC current, via the inverter bridge, to flow via capacitors coupled between two output AC phases at a time such that the output AC voltages remain within predefined permissible limit range around sinusoidal reference values. In order to increase input DC current value, for keeping it within predefined permissible limit range around a reference value, the inverter bridge is short-circuited according to the need, either by turning on both power switches of a phase switch or turning on the extra controllable power semiconductor switch if such is in use.

The narrower is the allowed range of the predefined permissible limits of the output voltage and of the input current, the more often the controllable power semiconductor switches have to work, i.e. the higher is the switching frequency. Because the size of the passive components, such as an inductor and a capacitor, can be reduced by increasing the switching frequency, it is advantageous to use higher than 1 kHz switching frequency in the inverter according to the present invention.

According to a method of the present invention, the voltage between a first and a second output AC phase terminals is increased by turning on the upper leg power switch, coupled to the first output AC phase terminal, and the lower leg power switch, coupled to the second output AC phase terminal. Respectively, the voltage between a first and a second output AC phase is decreased by turning on the lower leg power switch, coupled to the first output AC phase terminal, and the upper leg power switch, coupled to the second output AC phase terminal.

According to a method of the present invention, the control unit of the inverter forms a sinusoidal multiphase AC voltage reference signal and compares it to a corresponding measured multiphase actual inverter output AC voltage. The multiphase reference and actual signals may correspond either to phase voltages, i.e. voltage between an output AC terminal and the star point, or to main voltages, i.e. voltage between two output AC terminals. Based on the comparison, the actual voltage between a first and a second output AC phase is either increased or decreased as described above, in order to keep the actual voltage within predefined permissible range around the reference signal. In the comparison, the allowed voltage range around the reference has effect on the actual switching frequency at which the inverter power switches change their operating states. With modern components, the switching frequency is preferably above 1 kHz.

According to a method of the present invention, the control unit forms a reference signal for the input DC current and compares it to the measured actual input DC current. Based on the comparison, if the actual input DC current falls below a predefined permissible limit associated to the reference, the positive and negative terminals of the inverter bridge are short-circuited either by turning on both power switches of one phase switch or turning on the by-pass switch, being an extra controllable power semiconductor switch, coupled between the positive and negative terminals of the inverter bridge, for a predetermined duration or as long as the current has risen up to a predetermined value.

In accordance with the present invention, there is provided also a new computer program, i.e. a software package, which can be downloaded to a memory device. The computer program comprises computer executable instructions for controlling a control unit of an inverter to carry out a method according to the invention for controlling the operation of the controllable power semiconductor switches of the inverter.

The present invention comprises also a new computer program product, comprising a non-volatile computer readable medium, e.g. a compact disc "CD", encoded with a computer program according to the invention.

The present invention is beneficial over the prior art technology in that the inverter output AC voltage is essentially sinusoidal without a heavy LCL filter. Thus, a lot of cost, weight and physical space are saved.

The invention is defined in more detail in the present description and the following examples of embodiments. The scope of the protection is defined in the independent claims and the preferred embodiments in other claims.

### Description of drawings

Below exemplifying embodiments of the invention appears a more detailed explanation using examples with references to the enclosed figures, wherein:
Fig.1 presents a prior art inverter,
Fig.2 presents an inverter according to an exemplifying and non-limiting embodiment of the present invention,
Fig.3 presents an inverter according to an exemplifying and non-limiting embodiment of the present invention, and
Fig.4 illustrates operation of an inverter according to an exemplifying and non-limiting embodiment of the present invention.
Figure 1 has already been explained in the Background of the invention -section of this document.

### Detailed description of exemplifying embodiments

Fig.2 presents a multiphase inverter 20 according to an exemplifying and non-limiting embodiment of the present invention. The example presents the most normal case wherein the number of output phases is three, but the invention per se allows also for a higher phase number.

The inverter 20 comprises an inductor L₂₁ between the positive DC connection terminal D+ of the supplying DC voltage U_{D} and the positive DC terminal B+ of an inverter bridge B₂₀. The negative DC connection terminals D- and the negative DC terminal B- of U_{D} and B₂₀, respectively, are in this example connected directly.

The inverter bridge B₂₀ comprises three phase switches P_{U}, P_{V}, P_{W}. The phase switch P_{U} comprises an upper leg power switch, including a serial connection of a diode D₂₁ and an IGBT V₂₁, between the positive DC terminal B+ and the output terminal U, and a lower leg power switch, including a serial connection of a diode D₂₄ and an IGBT V₂₄, between the output terminal U and the negative DC terminal B-. The diodes allow the phase switch to conduct current in one direction only, to the direction of the negative terminal B-.

The two other phase switches P_{V}, P_{W}, are similar to P_{U}, having output terminals V and W, respectively. In P_{V}, the serial connection of diode D₂₂ and IGBT V₂₂ form the upper leg power switch and the serial connection of diode D₂₅ and IGBT V₂₅ form the lower leg power switch. Respectively in PW, the serial connection of diode D₂₃ and IGBT V₂₃ form the upper leg power switch and the serial connection of diode D₂₆ and IGBT V₂₆ form the lower leg power switch.

The inverter 20 comprises also a capacitive filter part C₂₀, comprising in this example star-connected capacitors C₂₁, C₂₂, C₂₃, between the output phase terminals U, V, W, and a star point N.

The inverter 20 comprises also a control unit CU₂₀, which controls the operation of the inverter bridge B₂₀ on the basis of e.g. the measurements of the inverter input current and the measured output voltages.

Fig. 3 presents a multiphase inverter 30 according to another exemplifying and non-limiting embodiment of the present invention, as an example of possible embodiments of the invention. In this example, the inverter bridge B₂₀ is similar to that in Fig.2, but the inductance circuit L₃₀ comprises an inductor L₃₁ in one of the connections between the DC connection terminals D+ and D- and the DC terminals B+ and B- and an inductor L₃₁ in the other one of the above-mentioned connections. For the operation of the inverter according to the invention, it is irrelevant whether the inductor is used at both connections or at only one of the two connections between the supply voltage and the inverter bridge. In addition to the above-mentioned inductors, it is possible to couple a so-called common-mode inductor to either input or output connection of the inverter in order to reduce high-frequency emission from the device. The common-mode inductor is not presented in figure 3.

In the embodiment of Fig.3, a controllable power semiconductor switch V₃₁ is coupled between the DC terminals B+ and B-. This switch can be used as a by-pass switch to short-circuit the terminals of the inverter bridge instead of short-circuiting of one phase switch, in order to decrease power losses.

In this exemplifying and non-limiting embodiment, the output capacitive filter circuit C₃₀ comprises delta-connected capacitors C₃₁, C₃₂, and C₃₃ between the output terminals U, V, W.

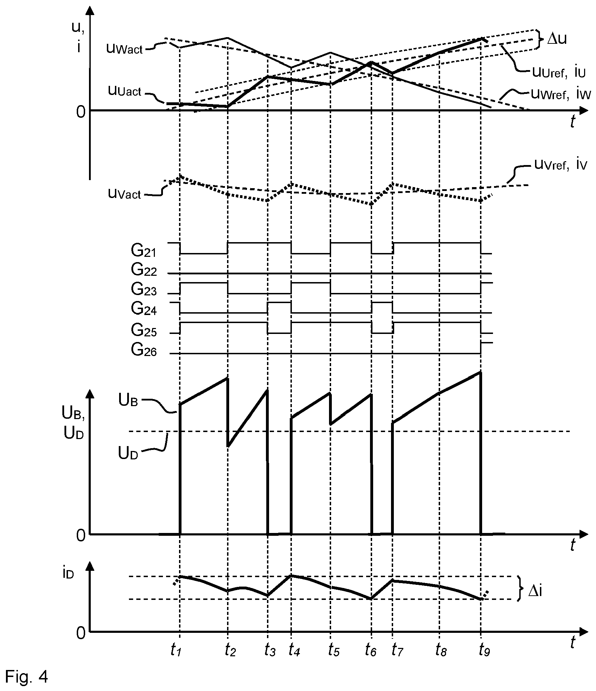

Fig. 4 illustrates the operation of an inverter according to an exemplifying and non-limiting embodiment of the present invention, as a function of time t. The figure shows characteristic curve shapes only, without precise timing or magnitude relations to real signals during the operation of the inverter. The behavior of the illustrated signals is best understood from the background of Fig.2.

The upper part of the figure shows inverter output related signals;
- u_{Uref}, u_{Vref} and u_{Wref} represent reference signals of the output phase voltages, formed by the control unit CU₂₀, CU₃₀,
- U_{Uact}, U_{Vact} and U_{Wact} are actual output phase voltages, i.e. voltage differences between the star point N and the output terminals U, V, and W, respectively,
- i_{U}, i_{V} and i_{W} are output phase currents. For clarity of the figure, phase currents are assumed to be in phase with phase voltages and therefore they are shown as a combined curve with u_{_ref} signals,
- Δu describes the predefined permissible output voltage range around the reference voltages. A voltage range of similar size is used around each reference, although it is shown in the figure only with U_{Uref}.

The following signals G₂₁...G₂₆ represent control signals of inverter bridge controllable power semiconductor switches, such that e.g. G₂₁ represents the control signal of V₂₁, etc. A high state of the control signal means that the switch is turned on and a low state means a turn off state, respectively.

Next, the DC supply voltage U_{D} and the inverter bridge input voltage UB are illustrated, and the lowest curve represents the inverter input current i_{D} and its allowed range Δi.

According to Fig.4, the following occurs:
- Before t₁, the phase switch P_{U} is short-circuited by turning on V₂₁ and V₂₄, which means that voltage U_{B} is close to zero and full supply voltage U_{D} is coupled over inductance L₂₁ increasing its current i_{D} rapidly. Absolute values of all the output phase voltages U_{Uact}, U_{Vact}, U_{Wact}, are decreasing because the phase currents i_{U}, i_{V}, i_{W}, are discharging the filter capacitors C₂₁... C₂₃.
- At time instant t₁, V₂₃ and V₂₅ are turned on and all other IGBTs are turned off, which means that inverter input voltage U_{B} jumps to the value of the output main voltage U_{WV}, i.e. the difference between phase voltages u_{Wact} and u_{Vact}, and the input current i_{D} starts to flow via filter capacitors C₂₃ and C₂₂, thus charging them and increasing the main voltage u_{WV}, i.e. increasing the absolute values of phase voltages u_{Wact} and u_{Vact}.
- At time instant t₂, u_{Uact} falls below a predetermined limit value, i.e. u_{Uref} - 0,5*Δu, which means that the filter capacitor of U-phase needs to be charged. Therefore V₂₃ is turned off and V₂₁ turned on with a result of that U_{B} decreases to the value of U_{UV} and the input current i_{D} path changes from C₂₃ to C₂₁, starting to increase U_{Uact} voltage.
- For most of the period t₁...t₃ the inverter bridge input voltage U_{B} is higher than the supply voltage U_{D}, which is why the supply current i_{D} decreases and reaches the lower limit of allowed range ΔI at time instant t₃. In order to increase the current, V₂₅ is turned off and phase switch P_{U} is short-circuited at time instant t₃ by turning on V₂₄.
- At time instant t4, i_{D} has increased to a desired value. The short-circuit period is terminated by turning off V₂₁ and V₂₄, and the input current is conducted to charge filter capacitors C₂₃ and C₂₂, i.e. to increase main voltage u_{WV}, by turning on V₂₃ and V₂₅.
- At time instant t₅, u_{Uact} has fallen again to the lower limit, and the input current path is changed from C₂₃ to C₂₁ by turning off V₂₃ and turning on V₂₁.

Based on the above, the operation logic of the inverter is obvious to a person skilled in the art, so the explanation will not be continued longer. It should be noted that instead of phase voltages as described above, the main voltages can be used as control variables and instead of short-circuiting a phase switch, the extra controllable power semiconductor switch, such as V₃₁ in Fig.3, can be used to short-circuit the inverter bridge input terminals in order to increase the input current i_{D} value. By the by-pass switch using V₃₁, the short-circuit current flows only via one power semiconductor instead of four ones, which is advantageous in terms of power losses. As is apparent from the previous description, the controllable power semiconductor switches have to change their conduction states the more often, the narrower are the allowed ranges, i.e. Δu, Δi of the output voltages and the input current. This conduction state changing frequency, called the switching frequency, is also the higher the smaller are the passive component, i.e. inductor and capacitor values of the inverter. In order to decrease the passive component sizes and costs, it is advantageous to use higher than 1 kHz switching frequency.

The control unit ensures, on the basis of measurements of the output voltages and the input current that these variables remain within predefined permissible limits around the reference values. The reference value for input current may follow e.g. the power output capacity of the external DC supply circuit, like a solar cell field, and the references for the output voltages can be calculated on the basis of the grid voltage value and needed phase difference to it, in order to keep the input and output power in balance. For these tasks the control unit needs some external measurement data, but since these kind of control arrangements do not belong to the scope of this invention, they are not discussed in more detail in this context.

The specific examples provided in the description above are not exhaustive unless otherwise explicitly stated, nor should they be construed as limiting the scope and/or the applicability of the accompanied claims. The features recited in the accompanied dependent claims are mutually freely combinable unless otherwise explicitly stated. The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality.

## Claims

1. An inverter comprising:
- direct current connection terminals (D+, D-) for connecting to a direct current circuit external to the inverter,
- alternating current terminals (U, V, W) for connecting to a multiphase alternating current circuit external to the inverter,
- a multiphase inverter bridge (B₂₀) comprising a positive and a negative direct current terminal (B+, B-) and phase switches (P_{U}, P_{V}, P_{W}) between the positive and negative direct current terminals, each phase switch comprising an upper leg power switch (D₂₁/V₂₁, D₂₂/V₂₂, D₂₃/V₂₃) coupled to the positive direct current terminal and a lower leg power switch (D₂₄/V₂₄, D₂₅/V₂₅, D₂₆/V₂₆) coupled to the negative direct current terminal, with a common connection point of the upper and lower leg power switches being coupled to a corresponding one of the alternating current terminals (U, V, W),
- an inductive circuit, comprising either an inductor (L₃₁, L₃₂) at both of two connections or only an inductor (L₂₁) at one of the two connections between the direct current connection terminals and the direct current terminals (B+, B-) of the multiphase inverter bridge,
- a capacitive circuit, comprising either a capacitor (C₂₁, C₂₂, C₂₃) between each alternating current terminal of the inverter and a common star point (N) or, when the multiphase inverter bridge (B₂₀) is a three-phase inverter bridge, a capacitor (C₃₁, C₃₂, C₃₃) between each alternating current terminal of the inverter, and
- a control unit (CU₂₀, CU₃₀) for controlling the phase switches of the multiphase inverter bridge,
wherein each of the upper leg and lower leg power switches of the multiphase inverter bridge is able to conduct current in one direction only, the direction being from the positive direct current terminal of the multiphase inverter bridge towards the negative direct current terminal of the multiphase inverter bridge,
**characterized in that** the control unit is configured to form sinusoidal voltage reference signals (u_{Uref}, u_{Vref}, u_{Wref}), compare the sinusoidal voltage reference signals to alternating voltages (u_{Uact}, u_{Vact}, u_{Wact}) measured at the alternating current terminals (U, V, W) of the inverter, and for each of the alternating voltages:
- control, in response to a situation in which the alternating voltage under consideration exceeds an upper limit of a permissible variation range (Δu) around the corresponding one of the sinusoidal voltage reference signals, the phase switches (P_{U}, P_{V}, P_{W}) to draw current from a corresponding one of the alternating current terminals, and
- control, in response to a situation in which the alternating voltage under consideration gets below a lower limit of the permissible variation range, the phase switches (P_{U}, P_{V}, P_{W}) to supply current to the corresponding one of the alternating current terminals.

2. An inverter as claimed in claim 1, **characterized in that** the upper leg power switch of each phase switch comprises a serial connection of a diode and a controllable power semiconductor switch and the lower leg power switch of each phase switch comprises a serial connection of a diode and a controllable power semiconductor switch.

3. An inverter as claimed in claims 1 and 2, **characterized in that** the upper leg power switch of each phase switch is a controllable power semiconductor switch with internal one-direction current conducting capability and reverse voltage blocking capability and the lower leg power switch of each phase switch is a controllable power semiconductor switch with internal one-direction current conducting capability and reverse voltage blocking capability.

4. An inverter as claimed in claims 1 to 3, **characterized in that** the inverter comprises a controllable by-pass switch (V₃₁) being a controllable power semiconductor switch and coupled between the positive and negative direct current terminals (B+, B-) of the multiphase inverter bridge.

5. An inverter as claimed in claims 1 to 4, **characterized in that** the switching frequency of each upper leg power switch and each lower leg power switch of the inverter multiphase bridge is higher than 1 kHz.

6. An inverter according to any one of claims 1 to 5, **characterized in that** the control unit (CU₂₀, CU₃₀) is based on a digital logic circuit with a down-loadable software.

7. An inverter according to any one of claims 1 to 6, **characterized in that** the control unit is configured to form a current reference signal, to compare the current reference signal to input direct current (io) measured at one of the direct current connection terminals, and to turn on both the upper leg and lower leg power switches of one of the phase switches in response to a situation in which the input direct current is below a lower limit associated to the current reference signal.

8. An inverter according to any one of claims 1 to 6, **characterized in that** the inverter comprises a controllable by-pass switch (V₃₁) being a controllable power semiconductor switch and coupled between the positive and negative direct current terminals (B+, B-) of the multiphase inverter bridge, and the control unit is configured to form a current reference signal, to compare the current reference signal to input direct current (i_{D}) measured at one of the direct current connection terminals, and to turn on the controllable by-pass switch in response to a situation in which the input direct current is below a lower limit associated to the current reference signal.

9. An inverter according to any one of claims 1 to 8, **characterized in that** the control unit (CU₂₀, CU₃₀) is configured to control a width of the permissible variation range (Δu) of the alternating voltages to be so narrow and a width of a permissible variation range (Δi) of input direct current (i_{D}) measured at one of the direct current connection terminals to be so narrow that the average switching frequency of each upper leg power switch and each lower leg power switch of the inverter multiphase bridge is higher than 1 kHz.

10. A method for controlling phase switches of an inverter as claimed in claims 1 to 9, **characterized in that** the method comprises:
- forming sinusoidal voltage reference signals (u_{Uref}, u_{Vref}, u_{Wref}),
- comparing the sinusoidal voltage reference signals to alternating voltages (u_{Uact}, u_{Vact}, u_{Wact}) measured at the alternating current terminals (U, V, W) of the inverter, and for each of the alternating voltages:
- controlling, in response to a situation in which the alternating voltage under consideration exceeds an upper limit of a permissible variation range (Δu) around the corresponding one of the sinusoidal voltage reference signals, the phase switches (P_{U}, P_{V}, P_{W}) to draw current from a corresponding one of the alternating current terminals, and
- controlling, in response to a situation in which the alternating voltage under consideration gets below a lower limit of the permissible variation range, the phase switches (P_{U}, P_{V}, P_{W}) to supply current to the corresponding one of the alternating current terminals.

11. A computer program for controlling phase switches of an inverter as claimed in claims 1 to 9 wherein the control unit (CU₂₀, CU₃₀) of the inverter is a programmable processing system, **characterized in that** the computer program comprises computer executable instructions for controlling the programmable processing system to:
- form sinusoidal voltage reference signals (u_{Uref}, u_{Vref}, u_{Wref}),
- compare the sinusoidal voltage reference signals to alternating voltages (u_{Uact}, u_{Vact}, u_{Wact}) measured at the alternating current terminals (U, V, W) of the inverter, and for each of the alternating voltages:
- control, in response to a situation in which the alternating voltage under consideration exceeds an upper limit of a permissible variation range (Δu) around the corresponding one of the sinusoidal voltage reference signals, the phase switches (P_{U}, P_{V}, P_{W}) to draw current from a corresponding one of the alternating current terminals, and
- control, in response to a situation in which the alternating voltage under consideration gets below a lower limit of the permissible variation range, the phase switches (P_{U}, P_{V}, P_{W}) to supply current to the corresponding one of the alternating current terminals.

12. A computer program product comprising a non-volatile computer readable medium, **characterized in that** the non-volatile computer readable medium is encoded with a computer program of claim 11.
